Europäisches Patentamt

(19) European Patent Office

Office européen des brevets

(11) Veröffentlichungsnummer: **0 175 996**
**B1**

(12) # EUROPÄISCHE PATENTSCHRIFT

(45) Veröffentlichungstag der Patentschrifft:
**17.01.90**

(51) Int. Cl.⁴: **H 02 K  7/10,** E 05 F  15/16,
**B 60 J  7/00**

(21) Anmeldenummer: **85111396.9**

(22) Anmeldetag: **10.09.85**

(54) Antriebseinheit, insbesondere zum Verstellen von Fensterscheiben, Schiebedächern, Sitzen und ähnlichen Kraftfahrzeugteilen.

(30) Priorität: **22.09.84 DE 3434905**

(43) Veröffentlichungstag der Anmeldung:
**02.04.86 Patentblatt 86/14**

(45) Bekanntmachung des Hinweises auf die Patenterteilung:
**17.01.90 Patentblatt 90/03**

(84) Bennante Vertragsstaaten:
**FR GB IT**

(56) Entgegenhaltungen:
**EP-A-0 012 250**
**US-A-3 511 920**
**US-A-3 930 566**

(73) Patentinhaber: **SWF Auto-Electric GmbH**
**Stuttgarter Strasse 119 Postfach 135**
**D-7120 Bietigheim-Bissingen (DE)**

(72) Erfinder: **Andrei-Alexandru, Marcel**
**Berliner Strasse 8**
**D-7120 Bietigheim-Bissingen (DE)**
Erfinder: **Kofink, Wolfgang, Dr.**
**Steinäckerstrasse 23**
**D-7307 Aichwald-Lobenrot (DE)**
Erfinder: **Prohaska, Hans**
**Nelkenweg 44**
**D-7120 Bietigheim-Bissingen (DE)**

LIBERGRAF, STOCKHOLM 1990

## Beschreibung

Die Erfindung geht aus von einer Antriebseinheit, mit der insbesondere Fensterscheiben, Schiebedächer, Sitze und ähnliche Kraftfahrzeugteile verstellt werden können und die die Merkmale aus dem Oberbegriff des Anspruchs 1 aufweist.

Anlagen zum Verstellen von Fensterscheiben, Schiebedächern, Sitzen und dergleichen in Kraftfahrzeugen sollen so aufgebaut sein, daß das Kraftfahrzeugteil nicht gewaltsam verstellt werden kann und sich nicht von selbst verstellt. Die Anlage muß also so aufgebaut sein, daß sie eine Umkehrung des Kraftflusses nicht zuläßt. Bei einem Scherenfensterheber kann dies wenigstens zum Teil dadurch bewirkt werden, daß die Schere bei geschlossenem Fenster eine Lage nahe ihres Totpunktes einnimmt. Bei anderen Anlagen, z.B. einer Seilzugfensterhebeanlage, müssen andere Lösungen verwendet werden.

Es ist schon eine Antriebseinheit bekannt, bei der man davon ausgegangen ist, daß ein Schneckengetriebe selbsthemmend ist und deshalb von der Abtriebsseite her nicht angetrieben werden kann. Danach wäre ein selbsttätiges Verschieben einer Fensterscheibe, eines Schiebedaches oder eines Sitzes nicht möglich. Dies mag bei an ortsfesten Gestellen befestigten Schneckengetrieben richtig sein. Bei in Kraftfahrzeugen eingebauten Schneckengetrieben jedoch trifft dies nicht zu, weil die andauernd auftretenden Erschütterungen und Stöße unter Begünstigung durch das stets vorhandene Flankenspiel zwischen Schneckenrad und Schneckenwelle zu einer Bewegung des Schneckengetriebes von der Abtriebsseite her führt. Dies ist besonders dort der Fall, wo das zu verstellende Teil mit seinem Eigengewicht diesen unerwünschten Vorgang noch unterstützt.

Bei einer aus der DE-OS-1 708 310 bekannten Antriebseinheit mit einem in beide Drehrichtungen laufenden Elektromotor, dem ein Schneckengetriebe mit einer Schneckenwelle und mit einem mit der Schnecke kämmenden Schneckenrad nachgeordnet ist, ist die sperrende Funktion des Getriebes selbst dann vorhanden, wenn das Schneckengetriebe nicht in hohem Maße selbsthemmend ist. Die Schneckenwelle ist axial begrenzt verstellbar gelagert und liegt an einem in Achsrichtung federnd nachgiebigen Anschlag an. Ihr ist eine Bremse zugeordnet, die eine Drehbewegung der Schnecke hemmt, wenn der während einer Umkehrung des Kraftflusses vom Schneckenrad auf die Schnecke ausgeübte Axialschub die Federkraft des Anschlags überwindet und die Schnecke axial verschiebt. Bei einer Umkehrung des Kraftflusses ist dieser Axialschub praktisch immer größer als die Federkraft des Anschlags, so daß die Bremse dann immer wirksam wird und das zu verstellende Element nicht bewegt werden kann. Zur Bremse gehört eine Reibscheibe, die, senkrecht zur Schneckenwelle ausgerichtet, auf dieser sitzt und mit einer an einem feststehenden Teil der Antriebseinheit gebildeten Reibfläche zusammenarbeitet, wenn die Schneckenwelle in die eine Richtung axial verschoben wird. Die Schneckenwelle wird also mit dem feststehenden Teil der Einheit gekoppelt. Dieses feststehende Teil ist somit das Bremselement.

Ist bei einer Anlage die Schneckenwelle axial verschiebbar, so wird sie beim Verstellen des Kraftfahrzeugtils in die eine Richtung, z.B. beim Schließen des Fensters, von der Antriebsseite her und beim Verstellen des Kraftfahrzeugtils in die andere Richtung, z. B. beim Öffnen des Fensters, von der Abtriebsseite her in die eine Richtung und bei den umgekehrten Vorgängen, z.B. beim Öffnen des Fensters von der Antriebsseite her und beim Schließen des Fensters von der Abtriebsseite her, in die andere axiale Richtung verschoben. Der Federnde Anschlag ist also notwendig, um beim Schließen des Fensters von der Antriebsseite her zu verhindern, daß die Schneckenwelle gebremst wird. Die Kraft des federnden Anschlags ist natürlich auch dann wirksam, wenn das Fenster von der Antriebsseite her geöffnet wird. Sie addiert sich dann zu der ohnehin in axialer Richtung auf die Schneckenwelle wirkenden Kraft, die dadurch entsteht, daß das Schneckenrad seiner Drehung einen Widerstand entgegensetzt. Dieser erhöhte Axialschub vermindert den Wirkungsgrad der Einheit und führt zu erhöhtem Verschleiß und zu Geräuschen.

Aufgabe der Erfindung ist es, eine Antriebseinheit mit den Merkmalen aus dem Oberbegriff des Anspruchs 1 so weiterzuentwickeln, daß beim Verstellen des Kraftfahrzeugtils, insbesondere beim Öffnen des Fensters, der Wirkungsgrad erhöht ist und daß der Verschleiß verringert wird. Die Sperrung eines Kraftflusses von der Abtriebsseite her soll sicher und auf einfache Weise möglich sein.

Diese Aufgabe wird erfindungsgemäß dadurch gelöst, daß bei einer Antriebseinheit, die die Merkmale aus dem Obergriff des Anspruchs 1 aufweist, das Bremselement der drehbare Teil eines Drehrichtgesperres ist und sich in axialer Richtung an einem Anschlag abstützt. Als drehbarer Teil eines Drehrichtgesperres kam sich das Bremselement in die eine Richtung drehen, während es in die andere Richtung blockiert wird. Beim Öffnen der Fensterscheibe oder der Verstellung eines anderen Teils in die eine Richtung von der Abtriebsseite her wird die Schneckenwelle mit dem Bremselement gekoppelt. Eine Drehung der Schneckenwelle wäre jedoch nur dann möglich, wenn sich das Bremselement in die Richtung drehen könnte, in die es blockiert ist. Da sich somit das Bremselement nicht drehen kann, ist auch die Schneckenwelle blockiert. Auch beim Schließen des Fensters von der Antriebsseite her, wird die Schneckenwelle mit dem Bremselement gekoppelt. Ihre Drehrichtung ist jedoch jetzt umgekehrt, so daß sie das Bremselement ohne weiteres mitdrehen kann. Es ist deshalb nicht nötig, durch eine federnde Abstützung der Schneckenwelle eine Kopplung zwischen ihr und dem Bremselement zu verhindern. Beim Öffnen des Fensters von der Antriebsseite her, wird die Schneckenwelle in die andere Richtung axial verschoben und deshalb mit dem Bremselement nicht gekoppelt. Da die Schneckenwelle in axialer Richtung nicht federnd abgestützt werden muß, wirkt in die betrachtete axiale Richtung auch nur der Axialschub, der von dem Widerstand erzeugt wird, den das Schneckenrad einer Drehung entgegensetzt. Damit wird der Verschleiß an der Antriebseinheit geringer. Außerdem wird auch beim Öffnen eines Fensters ein guter Wirkungsgrad erreicht. In die andere axiale Richtung stützt sich die Schneckenwelle über das Bremselement an einem Anschlag ab.

Bei einer Antriebseinheit mit einem Elektromotor und einem Schneckengetriebe ist die Schneckenwelle meist axial zur Ankerwelle angeordnet oder sogar einstückig mit der Ankerwelle ausgebildet. Einer Kopplung des Bremselements mit der Schneckenwelle kann dann natürlich eine Kopplung mit der Ankerwelle gleichwertig sein.

Vorteilhafte Weiterbildungen einer erfindungsgemäßen Antriebseinheit kann man den Unteransprüchen entnehmen.

An sich kann die Schneckenwelle über weitere Teile, z. B. Zahnräder und Wellen, mit dem Bremselement koppelbar sein. Am günstigsten erscheint es jedoch, wenn gemäß Anspruch 2 das Bremselement und die Schneckenwelle unmittelbar miteinander koppelbar sind. Bevorzugt wird dann eine Ausführung, bei der gemäß Anspruch 3 das Bremselement axial zur Schneckenwelle angeordnet und gegenüber dieser frei drehbar ist.

Besonders vorteilhaft ist es auch, wenn gemäß Anspruch 6 das Bremselement und eine unmittelbar mit ihm koppelbare Welle, also vorzugsweise die Schneckenwelle, wenigstens teilweise koaxial zueinander liegen. Bremselement und Welle greifen also axial ineinander. Damit ist die axiale Länge der gesamten Anordnung begrenzbar. Bevorzugt wird dann eine Ausführung, bei der gemäß Anspruch 7 das Bremselement nur an der unmittelbar mit ihm koppelbaren Welle, vorzugsweise also der Schneckenwelle, drehbar gelagert ist. Lagerstellen des Bremselements im Gehäuse, deren Flucht mit den Lagerstellen der Schneckenwelle nur schwer zu erreichen ist, so daß Wirkungsgradverluste auftreten würden, können dann entfallen.

Zweckmäßige und einfache Konstruktionen, mit denen das Ineinandergreifen des Bremselements und der Welle erhalten werden kann kam man in den Unteransprüchen 8 bis 12 finden. Bevorzugt wird dabei eine Konstruktion, bei der gemäß Anspruch 9 das Bremselement eine Buchse ist, die die unmittelbar mit ihr koppelbare Welle übergreift. Dadurch ist leicht ein großer Außendurchmesser des Bremselements möglich. Außerdem muß für die Lagerung der Buchse die Schneckenwelle nicht geschwächt werden. Zur Kopplung der Welle mit der Buchse besitzt die Welle vorteilhafterweise eine Schulter, mit der sie die Buchse axial beaufschlagen kann.

Damit sich die Buchse möglichst zentral am Anschlag abstützen kann, ist gemäß Anspruch 14 in sie eine Scheibe eingesetzt.

Ist das Bremselement in beide axiale Richtungen unverschiebbar, so ist sichergestellt, daß einer Kopplung zwischen ihm und der Schneckenwelle nur durch eine axiale Verschiebung der Schneckenwelle erfolgen kann. Eine Verschiebung des Bremselements, z. B. durch ein Teil des Drehrichtgesperres, ist nicht möglich.

Eine freie Drehbarkeit in die eine Drehrichtung und eine Blockierung in die andere Drehrichtung erhält man auf vorteilhafte Weise gemäß Anspruch 18 dadurch, daß zum Drehrichtgesperre eine Schlingfeder gehört, über die das Bremselement in der einen Drehrichtung mit einem gestellfesten Teil koppelbar ist. Damit in hohem Maße sichergestellt ist, daß sich die Schneckenwelle vom Bremselement gelöst hat, noch ehe dieses von der Schlingfeder blockiert wird, weist gemäß Anspruch 22 die Schlingfeder einen ersten Bereich von Windungen, in dem sie das Bremselement berührt, und einen zweiten, dem befestigten Ende näheren Bereich von Windungen auf, in dem im gelösten Zustand der Schlingfeder der Durchmesser der Schlingfeder größer bzw. kleiner als der Durchmesser der Anlagefläche des Bremselements ist. Der zweite Bereich von Windungen ermöglicht noch eine geringe Drehung des Bremselements, nach der sich die Schneckenwelle auf jeden Fall von ihm gelöst hat. Wird versucht, das Fenster von außen zu öffnen, so legt sich bald auch der zweite Bereich von Windungen an das Bremselement, so daß das Getriebe sicher gesperrt ist.

Vorteilhaft ist auch eine Ausführung, bei der nach den Ansprüchen 24 und 25 zum Drehrichtgesperre ein Bremsband gehört.

Eine weitgehend eingehaltene axiale Ruhelage des Bremselements läßt sich auf einfache Weise gemäß Anspruch 26 auch dadurch erreichen, daß das Bremselement von der Schlingfeder in Richtung auf den axialen Anschlag belastet wird.

Muß durch das Getriebe sichergestellt werden, daß sich das Kraftfahrzeugteil, z. B. ein Sitz, von der Abtriebsseite aus weder in die eine noch in die entgegengesetzte Richtung verstellen läßt oder sich selbsttätig verstellt, so wird gemäß den Ansprüchen 29 und 30 ein weiteres Drehrichtungsgesperre verwendet.

Mehrere Ausführungen einer erfindungsgemäßen Antriebseinheit sind in den Zeichnungen dargestellt. Anhand der Figuren dieser Zeichnungen soll die Erfindung nun näher erläutert werden.

Es zeigen:

Fig. 1 ein erstes Ausführungsbeispiel mit einem Bremselement in Form einer auf der Schneckenwelle drehbar gelagerten Buchse,

Fig. 2 einen Schnitt entlang der Linie II - II aus Fig. 1,

Fig. 3 eine zweite Ausführung mit jeweils einer Buchse als Bremselement zweier Drehrichtgesperre und mit einer auf die Schneckenwelle aufgesetzten, separaten Schnecke,

Fig. 4 eine dritte Ausführung mit zwei Drehrichtgesperren auf derselben Seite der Schnecke,

Fig. 5 eine vierte Ausführung mit einer Welle als Bremselement, die unabhängig von der Schneckenwelle im Gehäuse drehbar gelagert ist,

Fig. 6 eine Bremswelle mit einer Schlingfeder, die zwei verschiedene Bereiche von Windungen aufweist,

Fig. 7 in axialer Ansicht eine Bremswelle mit einem Bremsband und

Fig. 8 eine Seitenansicht der Bremswelle und des Bremsbandes aus Fig.7.

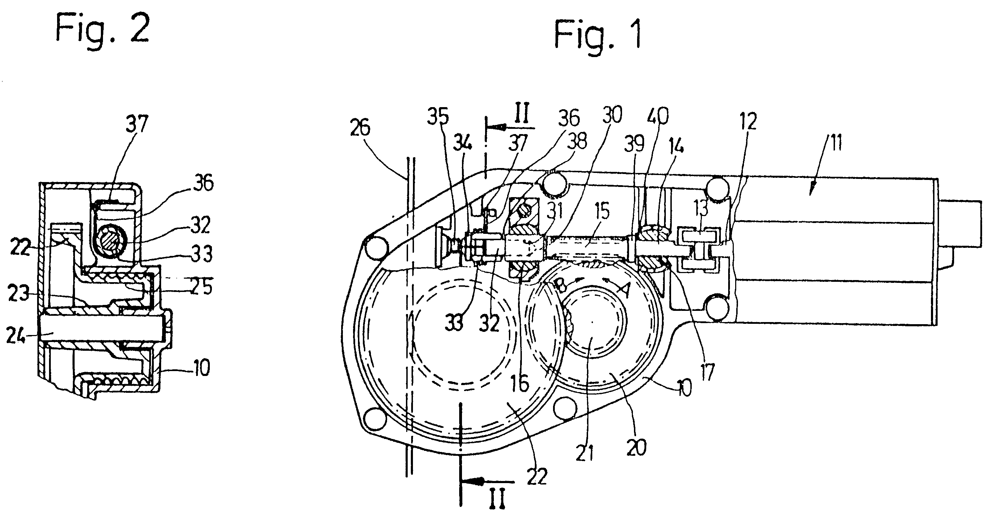

Bei der in Fig 1 und 2 gezeigten Antriebseinheit für eine Fensterhebeanlage ist in ein Gehäuse 10 aus Kunststoff ein Elektromotor 11 eingesetzt, dessen Ankerwelle 12 über eine Dauerkupplung 13 drehfest mit einer Schneckenwelle 14 verbunden ist. Die Schneckenwelle 14 fluchtet mit der Ankerwelle 12 und ist in einem mittleren Bereich zu einer Schnecke, vorzugsweise zu einer zweigängigen Schnecke 15 geformt. In axialer Richtung zu beiden Seiten der Schnecke 15 ist die Schneckenwelle 14 in zwei Kugelkalottenlagern 16 bzw 17 gelagert.

Die Schnecke 15 kämmt mit einem Schneckenrad 20, zu dem achsengleich ein Zahnrad 21 angeordnet ist, das sich mit der gleichen Winkelgeschwindigkeit wie das Schneckenrad 20 dreht und mit einem Zahnrad 22 kämmt, dessen Durchmesser wesentlich größer als der des Zahnrades 21 ist. Das Zahnrad 22 ist mit einer Habe 23 mit einer Welle 24 drehfest verbunden, die im Gehäuse 10 drehbar gelagert ist. Einstückig mit dem Zahnrad 22 ist eine Trommel 25 ausgebildet, auf die ein Seil 26 aufgewickelt sein kann, das für die Bewegungsübertragung zu einer Fensterscheibe benutzt wird.

Im Abschnitt 30, mit dem sie in dem der Kupplung 13 entfernten Lager 16 gelagert ist, weist die Schneckenwelle 14 eine Bohrung 31 auf, in die ein Lagerzapfen 32 eingepreßt ist, der einen geringeren Durchmesser als der Abschnitt 30 der Schneckenwelle 14 hat. Auf den Lagerzapfen 32 ist eine Buchse 33 frei drehbar aufgeschoben, die das Bremselement der Antriebseinheit und der drehbar Teil eines Drehrichtgesperres ist. Die Buchse 33 ist länger als der Lagerzapfen 32. In ihre der Schneckenwelle 14 abgewandten Stirnseite ist eine Scheibe 34 eingesetzt, die einen zentralen Hocken mit kugeliger Oberfläche besitzt und über die sich die Buchse 33 an einem gehäusefesten Anschlag 35 abstützt. Als Anschlag ist eine Einstellschraube vorgesehen. Die Buchse 33 wird von einer Schlingfeder 36 umgeben, die mit ihrem einen Ende 37 fest am Gehäuse 10 verankert ist. Die Verankerung kann z. B. dadurch geschehen, daß das Ende 37 der Schlingfeder 36 in einen Schlitz des Gehäuses 10 eingelegt und dann der Kunststoff über dem Ende 37 warmverformt wird. Die Schlingfeder 36 ist Teil des Drehrichtgesperres und bewirkt, daß sich die Buchse 33 in die eine Richtung frei drehen kann, während sie in die andere blockiert wird. Das Gestell des Drehrichtgesperres wird durch das Gehäuse 10 gebildet.

In der in Fig 1 gezeigten Lage der Schneckenwelle 14 hat die Buchse 33 einen Abstand von der durch den dünneren Lagerzapfen 32 entstandenen Schulter 38 am Ende des Abschnitts 30 der Schneckenwelle 14. Einen noch größeren Abstand hat die Scheibe 34 von dem Lagerzapfen 32. Die Schneckenwelle 14 ist also momentan nicht an dem Anschlag 35 abgestützt. In die andere Richtung stützt sie sich momentan über eine weitere Schulter 39 und einer Unterlegscheibe 40 an der Kugelkalotte 17 ab.

Der Elektromotor 11 ist in beide Drehrichtungen ansteuerbar. Beim Öffnen des Fensters dreht sich seine Ankerwelle 12 und mit ihr die Schneckenwelle 14 so, daß das Schneckenrad 20 in Richtung des Pfeiles A angetrieben wird. Da für die Drehung des Schneckenrades 20 ein Drehmoment notwendig ist, erfährt die Schnecke 15 einen Axialschub in Richtung auf die Kugelkalotte 17 zu. Die Schneckenwelle 14 wird also gegen die Kugelkalotte 17 gedrückt. Die Buchse 33 dreht sich nicht. Läuft die Schneckenwelle 14 zum Schließen des Fensters in umgekehrte Richtung und treibt dabei das Schneckenrad 20 in Richtung des Pfeiles 8 an, so erfährt sie einen Axialschub in umgekehrte Richtung. Sie stößt mit ihrer Schulter 38 gegen die Buchse 33, wird also mit dieser gekoppelt und dreht die Buchse 33 mit. Dies ist möglich, weil die Schlingfeder 36 so angeordnet ist, daß sie die Buchse 33 in der betrachteten Drehrichtung nicht blockiert. Während der Drehung stützt sich die Schneckenwelle 14 über die Buchse 33 und die Scheibe 34 am Anschlag 35 ab.

Im normalen Betrieb, wird also die Funktion der Antriebseinheit durch die das Bremselement darstellende Buchse 33 nicht beeinflußt.

Wird nun der Kraftfluß umgekehrt und versucht, die Schneckenwelle 14 vom Schneckenrad 20 her anzutreiben, so bleibt die Zuordnung zwischen den Drehrichtungen des Schneckenrades 20 und den Drehrichtungen der Schneckenwelle 14 gleich. Es ändert sich jedoch die Zuordnung zwischen den Drehrichtungen des Schneckenrades 20 und den Richtungen des Axialschubs, der auf die Schneckenwelle 14 wirkt. Wird nun das Schneckenrad 20 in Richtung des Pfeiles A gedreht, in eine Richtung also, die dem Öffnen des Fensters entspricht, so wird die Schneckenwelle 14 mit ihrer Schulter 38 gegen die Buchse 33 gedrückt. Eine Drehung der Schneckenwelle 14 mußte jedoch nun in einer Richtung erfolgen, in der die Buchse 33 durch die Schlingfeder 36 blockiert wird. Der von der Buchse 33 einer Drehung der Schneckenwelle 14 entgegengesetzte Widerstand addiert sich zur Selbsthemmung des Schneckengetriebes, so daß das Getriebe insgesamt sicher blockiert wird. Das Fenster kann sich deshalb weder von selbst öffnen noch mit Gewalt geöffnet werden.

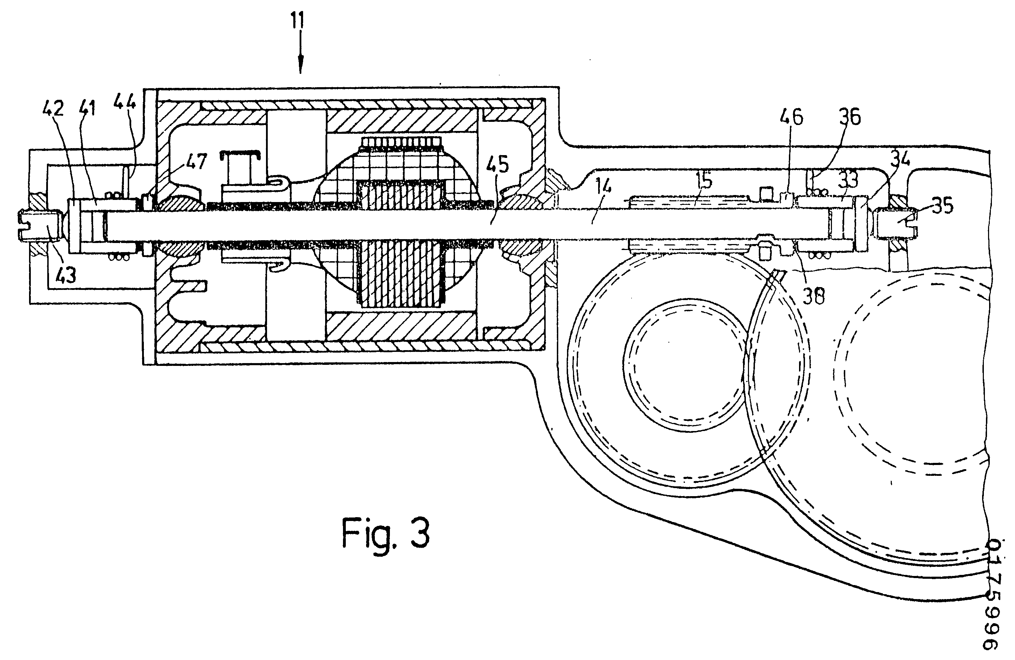

Bei der Ausführung nach Fig. 3 ist das Bremselement wiederum eine auf der Schneckenwelle 14 gelagerte Buchse 33, die sich über eine Scheibe 34 an dem Anschlag 35 abstützt. Die Buchse 33 wird wiederum von einer Schlingfeder 36 umgeben. Die Schneckenwelle 14 ist einstückig mit der Ankerwelle 45 des Elektromotors 11 ausgebildet. Die Schnecke 15 ist nun jedoch nicht unmittelbar aus der Schneckenwelle 14 ausgeformt. Sie ist vielmehr als separates Teil auf die Schneckenwelle 14 aufgeschoben und darauf in Drehrichtung und in axialer Richtung fest verankert. Das separate Teil ist über die eigentliche Schnecke hinaus in Richtung auf die Buchse 33 zu verlängert und weist einen Flansch 46 auf, durch den eine der Schulter 38 des ersten Ausführungsbeispiels entsprechende Schulter 38 der Schneckenwelle 14 gebildet wird. Mit dieser Schulter kann die Schneckenwelle 14 gegen die Buchse 33 stoßen. Die Kupplung zwischen der Schneckenwelle 14 und der Buchse 33 ist also wie bei dem Ausführungsbeispiel nach Fig. 1 eine Reibkupplung.

Damit die Schnecken- und Ankerwelle 14, 45 bei einem versuchten Antrieb von der Abtriebsseite her in jede Drehrichtung blockiert wird, ist ein zweites Drehrichtgesperre vorgesehen, das mit einer Buchse 41, einer in die Buchse 41 eingesetzten Scheibe 42 zum Abstützen an einer Einstellschraube 43 und einer Schlingfeder 44 dieselben Einzelteile wie das andere Drehrichtgesperre aufweist und im wesentlichen wie das andere Drehrichtgesperre aufgebaut ist. Die Schlingfeder 44 ist jedoch in die umgekehrte Richtung wie die Schlingfeder 36 um die ihr zugeordnete Buchse 41 geschlungen. Die Welle 14 kann mit der fest mit ihr verbundenen Anschlagscheibe 47 gegen die Buchse 41 stoßen.

Zusammen mit der Selbsthemmung des Schneckengetriebes blockiert also das erste Drehrichtgesperre die Welle 14 in die eine und das zweite Drehrichtgesperre in die andere Drehrichtung. Damit eignet sich die Antriebseinheit für einen Einsatz vor allem dort, wo Erschütterungen das Kraftfahrzeugteil in die eine oder die andere Richtung zu verstellen vermögen. Dies ist z.B. bei einer Anlage zur Verstellung eines Kraftfahrzeugsitzes oder eines Schiebedaches der Fall.

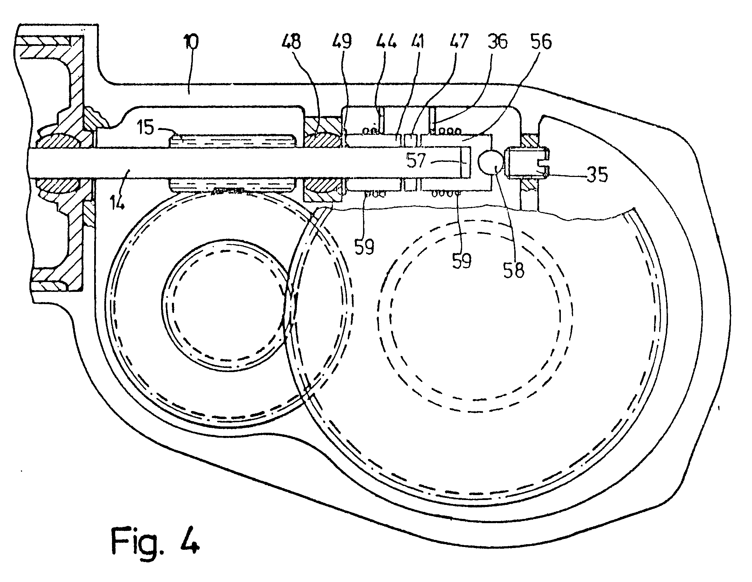

Bei der Ausführung nach Fig. 3 befindet sich das eine Drehrichtgesperre am einen Ende und das andere Drehrichtgesperre am anderen Ende der Welle 14, 15. Nach der Ausführung gemäß Fig. 4 kann man die beiden Drehrichtgesperre auch unmittelbar benachbart zueinander auf derselben Seite der Schnecke 15 anordnen. Die Schneckenwelle 14 ist auf der dem Anker des Elektromotors abgewandten Seite der Schnecke 15 in einer Kugelkalotte 48 gelagert, die in axialer Richtung sicher im Gehäuse 10 gehalten wird, und trägt nun die fest aufgepreßte Anschlagscheibe 47 auf der der Schnecke 15 abgewandten Seite der Kugelkalotte 48 und im Abstand zu dieser. Zwischen der Kugelkalotte 48 und der Anschlagscheibe 47 ist die Buchse 41, die von der Feder 44 umschlungen wird, drehbar auf der Schneckenwelle 14 gelagert. Über eine Zwischenscheibe 49 kann sie sich an der Kugelkalotte 48 abstützen.

Auf der anderen Seite der Anschlagscheibe 47 befindet sich drehbar auf der Schneckenwelle 14 die von der Feder 36 umschlungene Buchse 56, die im Gegensatz zur Buchse 33 der Fig. 1 und 3 an der einen Stirnseite einstückig geschlossen ist, also ein Sackloch 57 aufweist, in das die Schneckenwelle 14 eintaucht. Über eine in eine halbkugelige Aussparung eingelegte Kugel 58 stützt sich die Buchse 56 an der Einstellschraube 35 ab.

Wie bei der Ausführung nach Fig. 3 kam die Schlingfeder 44 die Buchse 41 wiederum in die eine Richtung blockieren, während sie die Buchse 41 in die andere Richtung frei drehen läßt. Die Schlingfeder 36 wirkt unter Vertauschung der Drehrichtungen in gleicher Weise auf die Buchse 56.

Anders als in Fig. 1 oder 3 trägt in Fig. 4 jede Buchse 41 bzw. 56 einen Ringflansch 59, auf dessen jeweils der Anschlagscheibe 47 zugewandten Seite sich die jeweilige Schlingfeder 44 bzw. 36 befindet. Die Schlingfedern sind nun so geformt und im Gehäuse 10 befestigt, daß sie am zugehörigen Ringflansch 59 anliegen und die Buchsen 41 bzw. 56 mit geringer Kraft gegen die Kugelkalotte 48 bzw. die Einstellschraube 35 drücken. Damit wird sichergestellt, daß sich die Anschlagscheibe 47 bei einer Umkehrung der Drehrichtung schnell von der Buchse löst. Außerdem ist dadurch eine unter Umständen blockierende Koppelung zwischen der Welle 14 und der jeweiligen Buchse 41 bzw. 56 in der einen Drehrichtung und im Normalbetrieb in hohem Maße ausgeschlossen.

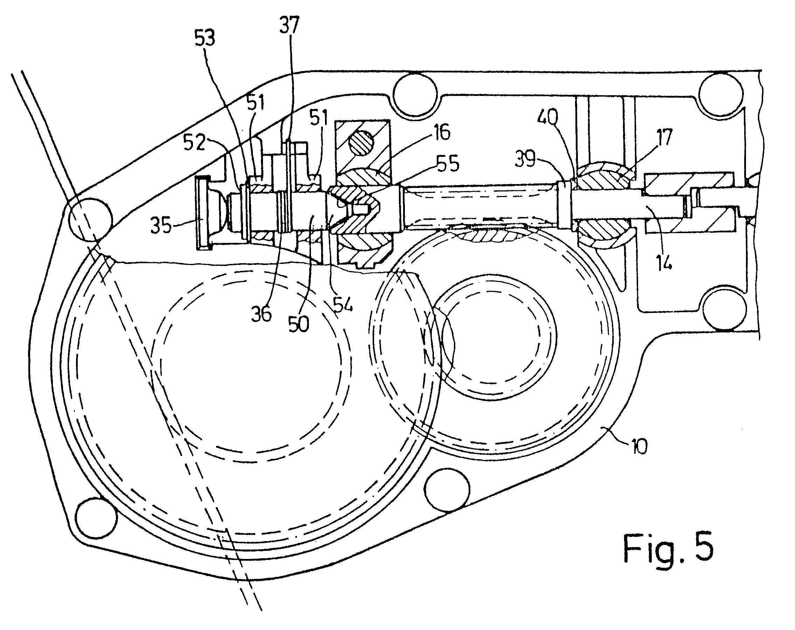

Das Ausführungsbeispiel nach Fig. 5 funktioniert im Prinzip genauso wie die Ausführungsbeispiele nach den Fig. 1 bis 4. Auch hier ist die Schneckenwelle 14 axial verschiebbar, wobei sie sich in die eine Richtung über die Schulter 39 und die Unterlegscheibe 40 an dem Kalottenlager 17 abstützt. Als Bremselement wird nun nicht mehr eine auf der Schneckenwelle 14 gelagerte Buchse, sondern eine massive Welle 50 verwendet. Diese ist axial zur Schneckenwelle 14, jedoch unabhängig von dieser in zwei Lageraugen 51 des Gehäuses 10 drehbar gelagert. Die Achse der Lageraugen 51 muß gut mit den Achsen der Sitze der Kugelkalotten 16 und 17 fluchten. Die Welle 50 soll also genau axial zur Schneckenwelle 14 angeordnet sein. Auf der der Schneckenwelle 14 abgewandten Seite, stützt sich die Welle 50 wieder an einem Anschlag 35 ab. Anders als die Buchse 33 der beiden vorhergehenden Ausführungsbeispiele, ist nun jedoch die Welle 50 auch in Richtung auf die Schneckenwelle 14 zu nicht mehr verschiebbar. Dazu trägt sie einen Sicherungsring 52, mit dem sie über eine Unterlegscheibe 53 an dem einen Lagerauge 51 anliegt. Die Welle 50 ist also in axialer Richtung nicht verschiebbar.

Die Schlingfeder 36 umgibt die Welle 50 mit ihren Windungen in dem Raum zwischen den beiden Lageraugen 51 und ist wie bei den vorhergehenden Beispielen mit ihrem Ende 37 am Gehäuse 10 befestigt. Der Schneckenwelle 14 zugewandt, trägt die Welle 50 einen kegeligen Kopf 54, mit dem sie in eine entsprechend geformte Bohrung 55 der Schneckenwelle 14 eintaucht. Soll das Fenster eines Kraftfahrzeugs von der Antriebsseite her geschlossen werden oder versucht sich das Fenster von selbst zu öffnen oder soll es mit Gewalt geöffnet werden, so werden die Schneckenwelle 14 und die Welle 50 über die kegeligen Flächen des Kopfes 54 und der Bohrung 55, also über eine Reibkupplung, miteinander verbunden. Beim Schließen von der Antriebsseite her wird die Schneckenwelle in eine Richtung gedreht, in der sich auch die Welle 50 frei drehen kann. Beim Öffnen von der Abtriebsseite her dagegen wird versucht, die Schneckenwelle in die andere Richtung zu drehen. Dies wird durch die Selbsthemmung des Schneckengetriebes und die Blockierung der Welle 50 durch die Schlingfeder 36 verhindert. Beim Öffnen des Fensters von der Antriebsseite her wird zwar die Schneckenwelle 14 in dieselbe Richtung gedreht, wie sie bei einem Öffnen von der Abtriebsseite her gedreht werden müßte, jedoch ist die Richtung des Axialschubs umgekehrt. Deshalb wird die Schneckenwelle 14 nicht mit der Welle 50 gekoppelt und kann von dieser nicht blockiert werden.

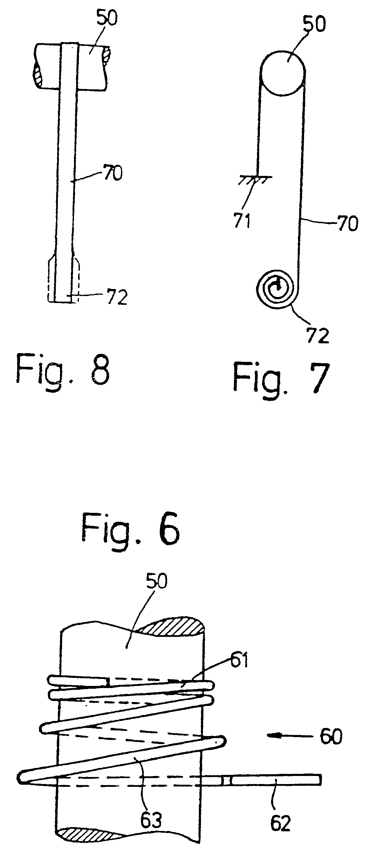

Beim Schließen des Fensters ist die Schneckenwelle 14 mit der Welle 50 gekoppelt und dreht diese mit. Beim Öffnen des Fensters wird im ersten Moment der Drehung die Schneckenwelle 14 zunächst von der Welle 50 entkoppelt, um dann völlig frei von der Welle 50 zu laufen. Damit der Einfluß der Welle 50 auf die Schneckenwelle 14 beim Öffnen des Fensters sehr klein bleibt, kann eine Schlingfeder 60 nach Fig. 6 verwendet werden. Diese Schlingfeder 60 besitzt einen ersten Bereich 61 von Windungen, in dem sie die Welle 50 leicht berührend eng umgibt. Näher zum für die Befestigung am Gestell vorgesehenen Ende 62 der Schlingfeder 60 besitzt diese einen zweiten Bereich 63 von Windungen, in dem im gelösten Zustand der Durchmesser der Windungen größer ist als der Durchmesser der Welle 50. In diesem Bereich 63 nimmt der Durchmesser der Windungen kegelförmig bis auf den Durchmesser der Windungen im Bereich 61 ab. Der Bereich 63 der Schlingfeder 60 soll gewährleisten, daß beim Öffnen der Fensterscheibe, eine kleine Drehbewegung der Welle 50 möglich ist, so daß sich die Schneckenwelle 14 ohne weiteres von der Welle 50 lösen kann.

Die notwendige Drehbewegung ist so klein, daß sie sich bei einem Versuch, das Kraftfahrzeugteil von der Abtriebsseite her zu bewegen oder bei Erschütterungen auf die sichere Lage des Kraftfahrzeugteils wegen der großen Getriebeuntersetzung praktisch nicht auswirkt.

Anstelle einer Schlingfeder kam für das Drehrichtgesperre auch ein Bremsband 70 verwendet werden, wie es in den Fig. 7 und 8 dargestellt ist. Dieses Bremsband ist mit seinem einen Ende an einem gestellfesten Teil 71 befestigt, über eine Welle 50 geführt und mit seinem anderen Ende mit einer Feder 72 verbunden. Diese ist eine Stahlfeder und mit ihrem inneren Ende am Gestell 71 befestigt. Eine besonders einfache Konstruktion und Montage ergibt sich, wenn das Bremsband 70 und die Feder 72 einstückig aus einem federnden Material hergestellt sind. Dabei ist es nicht unbedingt notwendig, daß die Breite des Bremsbands mit der Breite der Feder übereinstimmt. In Fig. 8 ist mit gestrichelten Linien angedeutet, daß z. B. die Feder 72 breiter als das Bremsband 70 sein kann.

**Patentansprüche**

1. Antriebseinheit, insbesondere zum verstellen von Fensterscheiben, Schiebedächern, Sitzen und ähnlichen Kraftfahrzeugteilen, mit einem Gehäuse (10), mit einem in beide Drehrichtungen laufenden Elektromotor (11), dem ein Schneckengetriebe mit einer eine Schnecke (15) aufweisenden und axial begrenzt verschiebbar gelagerten Schneckenwelle (14) und mit einem mit der Schnecke (15) kämmenden Schneckenrad (20) nachgeordnet ist, und mit einer Bremsvorrichtung, die ein Bremselement (33, 41, 50, 56)) aufweist, mit dem die Schneckenwelle (14) durch eine axiale Verschiebung koppelbar ist, dadurch gekennzeichnet, daß das Bremselement (33, 41, 50, 56) der drehbare Teil eines Drehrichtgesperres ist und sich in axialer Richtung gegen Druck der Schneckenwelle (14) an einem Anschlag (35, 43, 48) abstützt.

2. Antriebseinheit nach Anspruch 1, dadurch gekennzeichnet, daß das Bremselement (33, 41, 50, 56) und die Schneckenwelle (14) unmittelbar miteinander koppelbar sind.

3. Antriebseinheit nach Anspruch 2, dadurch gekennzeichnet, daß das Bremselement (33, 41, 50, 56) axial zur Schneckenwelle (14) angeordnet und gegenüber dieser frei drehbar ist.

4. Antriebseinheit nach einem der Ansprüche 1 bis 3, dadurch gekennzeichnet, daß die Kupplung zwischen dem Bremselement (33, 41, 50, 56) und einem unmittelbar mit diesem koppelbaren Element (14), vorzugsweise der Schneckenwelle (14), eine Reibkupplung ist.

5. Antriebseinheit nach Anspruch 4, dadurch gekennzeichnet, daß die Reibflächen (54, 55) kegelförmig sind.

6. Antriebseinheit nach einem der Ansprüche 1 bis 5, dadurch gekennzeichnet, daß das Bremselement (33, 41, 50, 56) und eine unmittelbar mit ihm koppelbare Welle (14) wenigstens teilweise koaxial zueinander liegen.

7. Antriebseinheit nach Anspruch 6, dadurch gekennzeichnet, daß das Bremselement (33, 41, 56), vorzugsweise nur, an der unmittelbar mit ihm koppelbaren Welle (14) drehbar gelagert ist.

8. Antriebseinheit nach Anspruch 6 oder 7, dadurch gekennzeichnet, daß das Bremselement eine Welle (50) ist, die in eine Bohrung (55) der unmittelbar mit ihr koppelbaren Welle (14) hineingreift.

9. Antriebseinheit nach Anspruch 6 oder 7, dadurch gekennzeichnet, daß das Bremselement eine Buchse (33, 41, 56) ist, die die unmittelbar mit ihr koppelbare Welle (14) übergreift.

10. Antriebseinheit nach Anspruch 9, dadurch gekennzeichnet, daß die Welle (14) für die Buchse (33) einen Lagerzapfen (32) aufweist, dessen Durchmesser kleiner ist als der des benachbarten Abschnitts (30) der Welle (14) und daß die Welle (14) eine Schulter (38) besitzt, mit der sie die Buchse (33) axial beaufschlagen kann.

13. Antriebseinheit nach Anspruch 10, dadurch gekennzeichnet, daß der Lagerzapfen (32) in eine Bohrung (31) der Welle (14) eingesetzt ist.

12. Antriebseinheit nach Anspruch 9, dadurch gekennzeichnet, daß die Schnecke (15) als separates Teil fest auf die Schneckenwelle (14) aufgesetzt ist und daß eine Schulter (38), mit der die Schneckenwelle (14) die Buchse (33) axial beaufschlagen kann, durch eine Stirnfläche des separaten Teils (15) gebildet wird.

13. Antriebseinheit nach Anspruch 9, dadurch gekennzeichnet, daß auf der Welle (14) eine Anschlagscheibe (47) befestigt ist, mit der sie die Buchse (33, 41, 56) axial beaufschlagen kann.

14. Antriebseinheit nach einem der Ansprüche 9 bis 13, dadurch gekennzeichnet, daß in die Buchse (33, 41) eine Scheibe (34, 42) eingesetzt ist, mit der sich die Buchse (33) am Anschlag (35, 43) abstützt.

15. Antriebseinheit nach einem der Ansprüche 9 bis 13, dadurch gekennzeichnet, daß die Buchse (56) einseitig einstückig geschlossen ist.

16. Antriebseinheit nach Anspruch 15, dadurch gekennzeichnet, daß die Buchse (56) stirnseitig eine Aufnahme für einen Kugelkörper (58) aufweist, über den sie sich am Anschlag (35) abstützt.

17. Antriebseinheit nach einem der vorhergehenden Ansprüche, dadurch gekennzeichnet, daß das Bremselement (50) in beide axiale Richtungen unverschiebbar ist.

18. Antriebseinheit nach einem der vorhergehenden Ansprüche, dadurch gekennzeichnet, daß zum Drehrichtungsgesperre eine Schlingfeder (36, 44, 60) gehört, über die das Bremselement (33, 41, 50, 56) in der einen Drehrichtung mit einem gestellfesten Teil (10) koppelbar ist.

19. Antriebseinheit nach Anspruch 18 dadurch gekennzeichnet, daß die Schlingfeder (36, 44, 60) mit ihrem einen Ende (37) an dem gestellfesten Teil (10) befestigt ist und die Windungen der Schlingfeder (36, 44, 60) und das Bremselement (33, 41, 50, 56) sich koaxial umgeben.

20. Antriebseinheit nach Anspruch 19, dadurch gekennzeichnet, daß die Schlingfeder (36, 44, 60) mit ihren Windungen das Bremselement (33, 41, 50, 56) außen umgibt.

21. Antriebseinheit nach Anspruch 19 oder 20, dadurch gekennzeichnet, daß das befestigte Ende (37) der Schlingfeder (36) einen abgebogenen Abschnitt aufweist, mit dem es hinter das gestellfeste Teil (10) greift.

22. Antriebseinheit nach Anspruch 19 oder 20, dadurch gekennzeichnet, daß die Schlingfeder (60) einen ersten Bereich (61) von Windungen, in dem sie das Bremselement (50) berührt, und einen zweiten, dem befestigten Ende (62) näheren Bereich (63) von Windungen aufweist, in dem im gelösten Zustand der Schlingfeder (60) der Durchmesser der Windungen größer bzw. kleiner als der Durchmesser der Anlagefläche des Bremselements (50) ist.

23. Antriebseinheit nach Anspruch 22, dadurch gekennzeichnet, daß der zweite Bereich (63) der Schlingfeder (60) kegelförmig ausgebildet ist.

24. Antriebseinheit nach einem der Ansprüche 1 bis 17, dadurch gekennzeichnet, daß zur Drehrichtgesperre ein Bremsband (70) gehört, das mit einem Ende an einem gestellfesten Teil (70) befestigt, über das Bremselement (50) geführt und mit seinem anderen Ende mit einer Feder (72) verbunden ist, die am Bremsband (70) zieht, und daß das Bremsband (70) und die Feder (72) einstückig ausgebildet sind.

25. Antriebseinheit nach Anspruch 24, dadurch gekennzeichnet, daß die Feder (72) eine Spiralfeder ist.

26. Antriebseinheit nach einem der Ansprüche 18 bis 25, dadurch gekennzeichnet, daß das Bremselement (41, 56) von der Schlingfeder (36, 44) oder dem Bremsband (70) in Richtung auf den Anschlag (35, 48) belastet ist.

27. Antriebseinheit nach Anspruch 26, dadurch gekennzeichnet, daß das Bremselement (41, 56) einen Vorsprung (59) aufweist, an dem die Schlingfeder (36, 44) angreift.

28. Antriebseinheit nach Anspruch 27, dadurch gekennzeichnet, daß sich der Vorsprung (59) zwischen der Schlingfeder (36, 44) und dem Anschlag (35, 48) befindet und die Schlingfeder (36, 44) axial gegen ihn drückt.

29. Antriebseinheit nach einem der vorhergehenden Ansprüche, dadurch gekennzeichnet, daß ein zweites Drehrichtungsgesperre vorhanden ist, mit dessen Bremselement (33, 41, 56) die Schneckenwelle (14) durch eine axiale Verschiebung in die entgegengesetzte Richtung koppelbar ist, und daß das Bremselement (33, 41, 56) des zweiten Drehrichtungsgesperres in die umgekehrte Drehrichtung wie das Bremselement (33, 41, 56) des ersten Drehrichtungsgesperres blockierbar ist und sich in entgegengesetzte axiale Richtung gegen den Druck der Schneckenwelle (14) an einem Anschlag (35, 43, 48) abstützt.

30. Antriebseinheit nach Anspruch 29, dadurch gekennzeichnet, daß die Welle (14) fest einen Kragen (47) trägt und sich zwei Buchsen (41, 56) als Bremselemente zu beiden Seiten des Kragens (47) auf der Welle (14) befinden.

## Claims

1. A drive unit, especially for adjusting window panes, sunroofs, seats and similar motor vehicle parts, comprising a housing (10), comprising an electric motor (11) running in both directions of rotation, behind which is inserted a worm gear with a worm shaft (14) within limits axially displaceably mounted and having a worm (15) and a worm wheel (20) meshing with the worm (15), and comprising a brake device having a brake element (33, 41, 50, 56) with which the worm shaft (14) may be coupled by axial displacement, characterised in that the brake element (33, 41, 50, 56) is the rotatable part of a rotation limiting device and, in the axial direction, it is supported on a stop (35, 43, 48) against the pressure of the worm shaft (14).

2. A drive unit according to claim 1, characterised in that the brake element (33, 41, 50, 56) and the worm shaft (14) may be directly coupled with each other.

3. A drive unit according to claim 2, characterised in that the brake element (33, 41, 50, 56) is axially arranged relative to the worm shaft (14) and may be freely rotated relative to the latter.

4. A drive unit according to any one of claims 1 to 3, characterised in that the clutch between the brake element (33, 41, 50, 56) and an element (14) directly coupled with it, preferably a worm shaft (14), is a friction clutch.

5. A drive unit according to claim 4, characterised in that the friction surfaces (54, 55) are cone-shaped.

6. A drive unit according to any one of claims 1 to 5, characterised in that the brake element (33, 41, 50, 56) and a shaft (14) directly coupled with it are at least partially coaxially positioned relative to each other.

7. A drive unit according to claim 6, characterised in that the brake element is directly rotatably mounted on the shaft (14) to be coupled with it, preferably only on this shaft.

8. A drive unit according to claim 6 or 7, characterised in that the brake element is a shaft (50) which engages in a bore (55) of the shaft (14) directly to be coupled with it.

9. A drive unit according to claim 6 or 7, characterised in that the brake element is a bush (33, 41, 56) which overlaps the shaft (14) directly to be coupled with it.

10. A drive unit according to claim 9, characterised in that the shaft (14) for the bush (33) has a bearing pin (32), the diameter of which is smaller than that of the adjacent portion (30) of the shaft (14) and that the shaft (14) has a shoulder (38) by means of which it can axially act upon the bush (33).

11. A drive unit according to claim 10, characterised in that the bearing pin (32) is inserted in a bore (31) of the shaft (14).

12. A drive unit according to claim 9, characterised in that the worm (15) as a separate part is firmly slipped on the worm shaft (14) and that a shoulder (38), by means of which the worm shaft (14) can axially act upon the bush (33), is formed by a front face of the separate part (15).

13. A drive unit according to claim 9, characterised in that a stop disk (47) is mounted on the shaft (14), by which stop disk it can axially act upon the bush (33, 41, 56).

14. A drive unit according to any one of claims 9 to 13, characterised in that a disk (32, 42) is inserted in the bush (33, 41), by means of which the bush (33) is supported on the stop (35, 43).

15. A drive unit according to any one of the preceding claims, characterised in that the bush (56) is closed on one side as a single piece.

16. A drive unit according to claim 15, characterised in that the bush (56) has a recess for a ball body (58) on its front side, via which ball body it is supported on the stop (35).

17. A drive unit according to any one of the preceding claims, characterised in that the brake element (50) is fixed in both axial directions.

18. A drive unit according to any one of the preceding claims, characterised in that the wrap spring (36, 44, 60) is part of the rotation limiting device, through which wrap spring the brake element (33, 41, 50, 56) may be coupled in one direction of rotation with a part (10) fixed on the mount.

19. A drive unit according to claim 18, characterised in that the wrap spring (36, 44, 60) is with its one end fastened on the part (10) fixed on the mount and the turns of the wrap spring (36, 44, 60) and the brake element (33, 41, 50, 56) surround each other coaxially.

20. A drive unit according to claim 19, characterised in that the wrap spring (36, 44, 60) surrounds the exterior of the brake element (33, 41, 50, 56) with its turns.

21. A drive unit according to claim 19 or 20, characterised in that the fixed end (37) of the wrap spring (36) has a bent portion by means of which it grips behind the part (10) fixed on the mount.

22. A drive unit according to claim 19 or 20, characterised in that the wrap spring (60) has a first area (61) of turns in which it touches the brake element (50) and a second area (63) of turns closer to the fixed end (62), in which in the relaxed condition of the wrap spring (60) the diameter of the turns is larger or smaller than the diameter of the contact area of the brake element (50).

23. A drive unit according to claim 22, characterised in that the second area (63) of the wrap spring (60) is cone-shaped.

24. A drive unit according to any one of claims 1 to 17, characterised in that a brake band (70) is part of the rotation limiting device, which brake band is with its one end fastened on a part (70) fixed on the mount, via which the brake element (50) is guided, and with its other end it is connected with a spring (72), which pulls the brake band (70), and that the brake band (70) and the spring (72) are formed as a single piece.

25. A drive unit according to claim 24, characterised in that the spring (72) is a spiral spring.

26. A drive unit according to any one of claims 18 to 25, characterised in that the brake element (41, 56) is loaded by the wrap spring (36, 44) or by the brake band (70) in the direction to the stop (35, 48).

27. A drive unit according to claim 26, characterised in that the brake element (42, 56) has a projection (59) upon which the wrap spring (36, 44) acts.

28. A drive unit according to claim 27, characterised in that the projection (59) is positioned between the wrap spring (36, 44) and the stop (35, 48) and that the wrap spring (36, 44) presses axially against it.

29. A drive unit according to any one of the preceding claims, characterised in that there is a second rotation limiting device with the brake element of which the worm shaft (14) may be coupled by an axial displacement into the opposite direction, and that the brake element (33, 41, 56) of the second rotation limiting device may be blocked in the reverse direction of rotation in comparison with the brake element (33, 41, 56) of the first rotation limiting device and in the opposite axial direction it is supported on a stop (35, 43, 48) against the pressure of the worm shaft (14).

30. A drive unit according to claim 29, characterised in that the shaft (14) firmly carries a collar (47) and that there are two bushes (41, 56) as brake elements on both sides of the collar (47) on the shaft (14).

**Revendications**

1. Unité d'entraînement, en particulier pour déplacer des vitres de fenêtres, des toits ouvrants, des sièges et des pièces analogues de véhicules, comprenant un boîtier (10), un moteur électrique (11) qui tourne dans les deux sens de rotation et auquel est associé, en aval, un engrenage à vis sans fin qui comporte un arbre à vis sans fin (14) muni d'une vis sans fin (15) et monté de façon coulissante et limitée axialement, et qui comporte une roue tangentielle (20) s'engrenant avec la vis sans fin (15), et un dispositif de freinage qui comporte un élément de freinage (33, 41, 50, 56) permettant d'accoupler l'arbre à vis sans fin (14) par un coulissement axial, caractérisée en ce que l'élément de freinage (33, 41, 50, 56) est la pièce rotative d'un dispositif de blocage en rotation et prend appui, dans le sens axial, contre une butée (35, 43, 48) à l'encontre de la pression de l'arbre à vis sans fin (14).

2. Unité d'entraînement conforme à la revendication 1, caractérisée en ce que l'élément de freinage (33, 41, 50, 56) et l'arbre à vis sans fin (14) sont directement accouplés.

3. Unité d'entraînement conforme à la revendication 2, caractérisée en ce que l'élément de freinage (33, 41, 50, 56) est disposé axialement par rapport à l'arbre à vis sans fin (14) et peut tourner librement par rapport à ce dernier.

4. Unité d'entraînement conforme à l'une quelconque des revendications 1 à 3, caractérisée en ce que l'accouplement entre l'élément de freinage (33, 41, 50, 56) et un élément (14) pouvant être directement accouplé avec ce dernier, de préférence l'arbre à vis sans fin (14), est un accouplement à friction.

5. Unité d'entraînement conforme à la revendication 4, caractérisée en ce que les surfaces de friction (54, 55) sont coniques.

6. Unité d'entraînement conforme à l'une quelconque des revendications 1 à 5, caractérisée en ce que l'élément de freinage (33, 41, 50, 56) et un arbre (14) pouvant être directement accouplé avec ce dernier sont au moins partiellement coaxiaux l'un par rapport à l'autre.

7. Unité d'entraînement conforme à la revendication 6, caractérisée en ce que l'élément de freinage (33, 41, 56) est monté en rotation, de préférence uniquement sur l'arbre (14) pouvant être directement accouplé avec lui.

8. Unité d'entraînement conforme à la revendication 6 ou 7, caractérisée en ce que l'élément de freinage est un arbre (50) qui pénètre dans un perçage (55) de l'arbre (14) pouvant être directement accouplé avec lui.

9. Unité d'entraînement conforme à la revendication 6 ou 7, caractérisée en ce que l'élément de freinage est une douille (33, 41, 56) qui entoure l'arbre (14) pouvant être directement accouplé avec elle.

10. Unité d'entraînement conforme à la revendication 9, caractérisée en ce que l'arbre (14) comporte, pour la douille (33), un tourillon (32) dont le diamètre est inférieur à celui de la portion voisine (30) de l'arbre (14), et en ce que l'arbre (14) possède un épaulement (38) avec lequel il peut solliciter axialement la douille (33).

11. Unité d'entraînement conforme à la revendication 10, caractérisée en ce que le tourillon (32) est emmanché dans un perçage (31) de l'arbre (14).

12. Unité d'entraînement conforme à la revendication 9, caractérisée en ce que la vis sans fin (15) est enfilée, sous forme de pièce séparée, sur l'arbre à vis sans fin (14), et en ce qu'un épaulement (38), avec lequel l'arbre à vis sans fin (14) peut solliciter axialement la douille (33), est formé par une face avant de la pièce séparée (15).

13. Unité d'entraînement conforme à la revendication 9, caractérisée en ce que, sur l'arbre (14) est fixée une rondelle de butée (47) avec laquelle l'arbre (14) peut solliciter axialement la douille (33, 41, 56).

14. Unité d'entraînement conforme à l'une quelconque des revendications 9 à 13, caractérisée en ce que, dans la douille (33, 41), est emmanchée une rondelle (34, 42) avec laquelle la douille (33) prend appui sur la butée (35, 43).

15. Unité d'entraînement conforme à l'une quelconque des revendications 9 à 13, caractérisée en ce que la douille (56) est fermée d'une seule pièce d'un côté.

16. Unité d'entraînement conforme à la revendication 15, caractérisée en ce que la douille (56) comporte à l'avant un logement pour un corps sphérique (58) par l'intermédiaire duquel elle prend appui sur la butée (35).

17. Unité d'entraînement conforme à l'une quelconque des revendications précédentes, caractérisée en ce que l'élément de freinage (50) est immobilisé dans les deux sens axiaux.

18. Unité d'entraînement conforme à l'une quelconque des revendications précédentes, caractérisée en ce qu'au dispositif de blocage en rotation appartient un ressort enroulé (36, 44, 60) par l'intermédiaire duquel l'élément de freinage (33, 41, 50, 56) peut être accouplé à une pièce (10) solidaire du châssis dans l'un des sens de rotation.

19. Unité d'entraînement conforme à la revendication 18, caractérisée en ce que le ressort enroulé (36, 44, 60) est fixé, par l'une de ses extrémités (37), à la pièce (10) solidaire du châssis, et les spires du ressort enroulé (36, 44, 60) et l'élément de freinage (33, 41, 50, 56) s'entourent coaxialement.

20. Unité d'entraînement conforme à la revendication 19, caractérisée en ce que le ressort enroulé (36, 44, 60) entoure l'extérieur de l'élément de freinage (33, 41, 50, 56) avec ses spires.

21. Unité d'entraînement conforme à la revendication 19 ou 20, caractérisée en ce que l'extrémité fixée (37) du ressort enroulé (36) comporte une portion repliée avec laquelle elle s'accroche derrière la pièce (10) solidaire du châssis.

22. Unité d'entraînement conforme à la revendication 19 ou 20, caractérisée en ce que le ressort enroulé (60) comporte une première zone (61) de spires où il touche l'élément de freinage (50) et une seconde zone (63) de spires qui est proche de l'extrémité fixée (62) et où, lorsque le ressort enroulé (60) est relâché, le diamètre des spires est supérieur ou, respectivement, inférieur à celui de la face d'appui de l'élément de freinage (50).

23. Unité d'entraînement conforme à la revendication 22, caractérisée en ce que la seconde zone (63) du ressort enroulé (60) est de forme conique.

24. Unité d'entraînement conforme à l'une quelconque des revendications 1 à 17, caractérisée en ce qu'au dispositif de blocage en rotation appartient un ruban de frein (70) qui, par l'une de ses extrémités, est fixé à une pièce (10) solidaire du châssis, passe autour d'un élément de freinage (50) et est relié, par son autre extrémité, à un ressort (72) qui tire le ruban de frein (70), et en ce que le ruban de frein (70) et le ressort (72) sont réalisés d'une seule pièce.

25. Unité d'entraînement conforme à la revendication 24, caractérisée en ce que le ressort (72) est un ressort enroulé.

26. Unité d'entraînement conforme à l'une quelconque des revendications 18 à 25, caractérisée en ce que l'élément de freinage (41, 56) est sollicité par le ressort enroulé (36, 44) ou par le ruban de frein (70) en direction de la butée (35, 48).

27. Unité d'entraînement conforme à la revendication 26, caractérisée en ce que l'élément de freinage (41, 56) comporte une saillie (59) sur laquelle prend appui le ressort enroulé (36, 44).

28. Unité d'entraînement conforme à la revendication 27, caractérisée en ce que la saillie (59) se trouve entre le ressort enroulé (36, 44) et la butée (35, 48) et pousse le ressort enroulé (36, 44) axialement contre cette dernière.

29. Unité d'entraînement conforme à l'une quelconque des revendications, caractérisée en ce qu'il est prévu un second dispositif de blocage en rotation avec l'élément de freinage (33, 41, 56) duquel l'arbre à vis sans fin (14) peut être accouplé par un déplacement axial dans le sens opposé, et en ce que l'élément de freinage (33, 41, 56) du second dispositif de blocage en rotation peut être bloqué dans le sens de rotation inverse comme l'élément de freinage (33, 41, 56) du premier dispositif de blocage en rotation et est appliqué, dans le sens axial opposé, contre une butée (35, 43, 48) à l'encontre de la pression de l'arbre à vis sans fin (14).

30. Unité d'entraînement conforme à la revendication 29, caractérisé en ce que l'arbre (14) supporte une collerette fixe (47) et deux douilles (41, 56) faisant fonction d'éléments de freinage se trouvent des deux côtés de la collerette (47) sur l'arbre (14).

Fig. 1

Fig. 2

Fig. 3

Fig. 4

Fig. 5

50

70

72

Fig. 8

50

71

70

72

Fig. 7

Fig. 6

50

61

60

63

62